# FASCICULE DE BREVET EUROPEEN

(11) **EP 1 556 940 B1**
(45) Date de publication et mention de la délivrance du brevet: **14.09.2011**
(21) Numéro de dépôt: 03780243.6
(22) Date de dépôt: 28.10.2003
(51) Int. Cl.: H02K 11/00

(54) **Alterno-démarreur de véhicule automobile**
Starter-Generator für ein Kraftfahrzeug
Starter-generator for a vehicule

(30) Priorité: 28.10.2002 FR 0213431
(43) Date de publication de la demande: 27.07.2005
(73) Titulaire: VALEO EQUIPEMENTS ELECTRIQUES MOTEUR, 94017 Créteil (FR)
(72) Inventeur: PIERRET, Jean-Marie, F-75012 Paris (FR); FAKES, Michel, F-59113 Seclin (FR); SCHULTE, Dirk, F-94120 Fontenay-sous-Bois (FR); PFIFFER, Jean, Julien, F-91230 Montgeron (FR)
(74) Mandataire: Gamonal, Didier
(86) Numéro de dépôt international: PCT/FR2003/003217
(87) Numéro de publication internationale: WO 2004/040738

(56) Documents cités:
- DE-A- 10 111 295
- DE-A- 19 705 228
- DE-A1- 19 543 284
- DE-A1- 19 543 284
- DE-A1- 19 949 914
- DE-A1- 19 949 914
- JP-U- 62 078 072
- JP-U- 62 078 072

## Description

### Domaine de l'invention

L'invention concerne un dispositif de refroidissement de l'électronique de puissance intégrée à l'arrière d'un alterno-démarreur d'un véhicule automobile. L'invention trouve des applications dans le domaine de l'industrie automobile et, en particulier, dans le domaine des alternateurs et des alterno-démarreurs pour véhicules automobiles.

### Etat de la technique

Dans un véhicule automobile, l'alternateur permet de transformer un mouvement de rotation du rotor inducteur, entraîné par le moteur thermique du véhicule, en un courant électrique induit dans le bobinage d'induit du stator polyphasé. En général, ce stator comporte trois enroulements de phase, en sorte que l'alternateur est de type triphasé. Les trois phases de l'induit sont reliées à un pont redresseur. Ce pont redresseur comporte trois branches comprenant chacune au moins deux diodes reliées à chaque phase. Or, ces diodes génèrent de la chaleur. Classiquement, le pont redresseur peut dissiper une énergie de l'ordre de 150 watts. Il doit donc être refroidi pour éviter toute surchauffe des diodes.

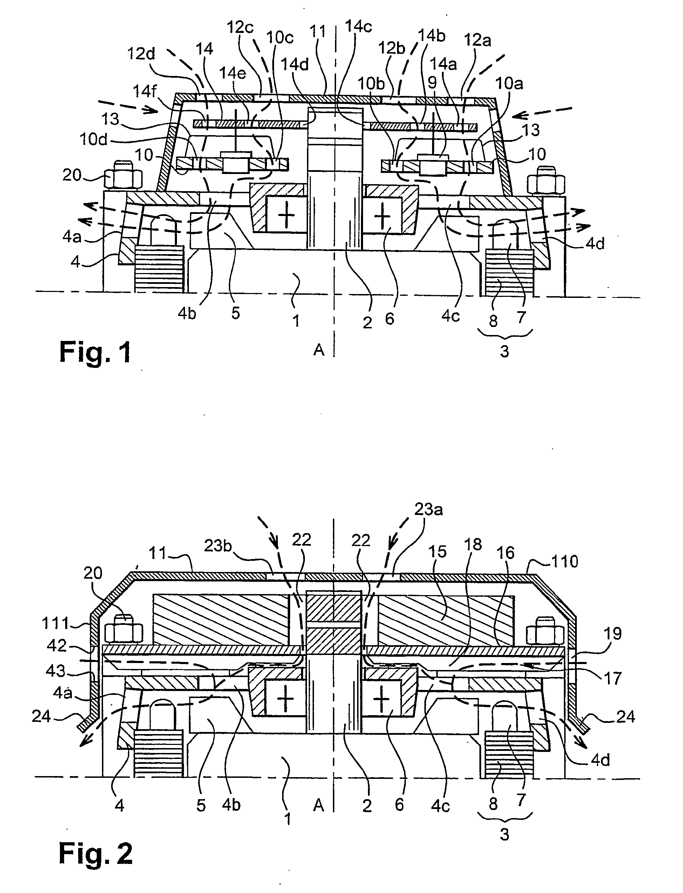

Sur la figure 1, on a représenté un exemple de la partie arrière d'un alternateur classique. Cet alternateur comporte un rotor 1 fixé sur un arbre de rotation 2, dont l'axe de rotation est référencé A et constitue l'axe de la machine tel que visible également dans le document DE A 197 05 228. Ce rotor 1 est entouré d'un stator 3 comportant un circuit magnétique 8 et un bobinage induit 7. Le stator 3, via son circuit 8 et son bobinage 7 génère un courant alternatif. Le bobinage d'induit comporte des enroulements de phase connectés en étoile et /ou en triangle. Chacun de ces enroulements comporte une sortie connectée vers le pont redresseur. Le courant généré dans le stator 3 est redressé au moyen du pont redresseur comportant des diodes 9. Ce stator 3 est supporté par un palier arrière 4 et un palier avant (non représenté). L'arbre de rotation 2 est maintenu par les deux paliers au moyen de roulements 6. Comme décrit dans le document DE A 0 197 05 228, le circuit magnétique 8 comporte un corps de stator sous la forme d'un paquet de tôles, qui de manière connue comporte des encoches, avantageusement du type semi-fermé, pour montage des enroulements des phases traversant le corps du stator et s'étendant de part et d'autre du corps pour former des chignons. Dans ce document on voit le palier avant de l'alternateur, ainsi que la poulie de celui-ci, destinée à être entraînée en rotation par le moteur thermique du véhicule via une transmission comportant au moins une courroie, et les ventilateurs internes portés par le rotor et implantés radialement en dessous des chignons pour ventilation interne de l'alternateur. Pour ce faire les paliers, de forme creuse, présentent des ouies d'entrée et de sortie de manière décrite ci-après. Le ventilateur arrière, portant la référence 5 à la figure1 est avantageusement plus puissant que le ventilateur avant.

Dans cet alternateur, une partie des éléments dissipants, à savoir les diodes positives 9 du pont redresseur, sont montés dans un pont dissipateur d'énergie calorifique 10. Ce pont dissipateur de chaleur comporte des ouvertures 10a - 10d, appelées aussi ouïes, dans lesquelles circule de l'air de refroidissement.

Les diodes 9 sont reliées électriquement à un connecteur 14 qui comporte également des passages d'air 14a -14f.

De plus, le pont dissipateur 10 comporte, sur sa face supérieure, des ailettes 13 qui favorisent le refroidissement du pont dissipateur 10.

Plus précisément, l'alternateur de la figure 1 comporte, dans sa partie arrière, un capot 11 venant entourer et protéger une électronique de puissance de l'alternateur correspondant notamment au pont redresseur. Pour permettre le passage de l'air à l'intérieur du capot 11, celui-ci est muni d'ouvertures 12a - 12d, appelées aussi ouïes. Ces ouvertures sont placées principalement dans la partie supérieure du capot 11. De plus, le ventilateur arrière 5 fixé sur l'arbre de rotation 2 ou sur le rotor 1 permet d'aspirer l'air à l'intérieur de l'alternateur. Ce ventilateur peut être par exemple de type centrifuge ou hélico-centrifuge. De cette façon, l'air, aspiré par le ventilateur 5, entre dans la partie arrière de l'alternateur par les ouïes 12a - 12d et, canalisé par les ailettes 13, vient lécher le dissipateur 10 et les diodes 9 et, par conséquent, les refroidissent. L'air ressort ensuite radialement par des ouïes 4a - 4d réalisées dans le palier arrière 4 du stator 3.

L'air est donc aspiré principalement dans l'axe de l'alternateur au niveau du capot de protection 11, puis il est refoulé latéralement par les ouïes du palier arrière 4 en refroidissent le pont redresseur, mais aussi les autres parties chaudes de l'alternateur telles que les chignons du bobinage induit 7.

Pour plus de précisions, le chemin parcouru par le flux d'air de refroidissement est représenté, sur la figure 1, par des traits et des flèches en pointillés. On se reportera également au document DE A 197 05 228 décrivant un exemple de réalisation de pont redresseur ainsi qu'un exemple de réalisation du rotor sous la forme d'un rotor à griffes. Le document DE A 101 11 295 décrit un autre type de pont redresseur. Dans ces deux documents les diodes négatives sont portées par le palier arrière en étant montées sur une plaque fixée sur le palier arrière ou emmanchées dans celui-ci, tandis que les diodes positives sont montées sur une plaque, à distance des diodes négatives. Dans le document DE A 100 11 295 cette plaque est dotée d'ouvertures. Cette plaque correspond au dissipateur 10 à la figure 1, les diodes 9 étant de manière précitée les diodes positives.

Actuellement, il existe aussi des alternateurs réversibles, qui peuvent constituer un moteur électrique permettant d'entraîner en rotation, via l'arbre du rotor solidaire de la poulie de l'alternateur, le moteur thermique du véhicule. Un tel alternateur réversible est appelé alterno-démarreur, ou encore alternateur-démarreur, et permet de transformer l'énergie mécanique en une énergie électrique, et vice et versa. Ainsi, un alterno-démarreur peut démarrer le moteur du véhicule automobile, constituer un moteur auxiliaire permettant d'aider le moteur thermique du véhicule pour entraîner ce véhicule automobile.

Dans ce cas, le pont redresseur situé en sortie de l'induit de l'alterno-démarreur, c'est-à-dire relié à chaque phase de l'induit, sert également de pont de commande des phases de l'alterno-démarreur. Ce pont redresseur comporte trois branches comprenant alors chacune au moins deux transistors de puissance de type MOS. Les transistors de ce pont redresseur sont pilotés chacun par une unité de commande. Cette unité de commande peut être réalisée de différentes manières. Le plus souvent, cette unité de commande comporte un driver associé à un comparateur et à d'autres composants électroniques. Un pont redresseur ainsi réalisé à partir de transistors de puissance et d'unités de commande dissipe une énergie moins importante que celle dissipée par un pont de diodes. En effet, lorsque le pont redresseur fonctionne en mode redresseur, et non en mode commande, alors les transistors de puissance sont pilotés de manière synchrone. Pour plus de précisions, on se reportera par exemple au document EP A1, 134,886. Cependant, l'énergie dissipée est tout de même de l'ordre de 50 watts et le pont redresseur doit donc aussi être refroidi.

Or, les unités de commande telles qu'elles viennent d'être décrites ont un encombrement relativement important, de sorte que le montage de ces unités de commande et des transistors de puissance sur un pont dissipateur ne laisse plus de place, sur le pont dissipateur, pour des ouïes. Il n'est donc pas possible de refroidir le pont à transistors de puissance par une circulation d'air comme celle montrée sur la figure 1.

Autrement dit, la disposition expliquée précédemment nécessite de réaliser des passages d'air axiaux à travers le pont dissipateur et le connecteur, ce qui réduit la place disponible pour placer des composants électroniques. En fait, cette place disponible est suffisante pour placer un pont redresseur à diodes, mais insuffisante pour une électronique de puissance plus importante. En particulier, dans le cas d'un alterno-démarreur, l'électronique de puissance est telle que chaque diode du pont redresseur est remplacée par au moins un transistor et une unité de commande.

Pour résoudre ce problème de place, la demande de brevet EP-A-1 032 114 propose un dispositif de refroidissement de l'électronique de puissance d'un alterno-démarreur, dans lequel les éléments dissipateurs sont constitués par une embase plaquée sur le palier arrière de l'alterno-démarreur, ce palier arrière comportant des canaux pour le passage de l'air de refroidissement. Autrement dit, dans ce dispositif, le pont dissipateur est plaqué contre le palier arrière, qui comporte, sur sa face arrière externe, des ailettes de refroidissement. L'air arrive donc latéralement ou radialement et refroidit par convection d'une part, le palier arrière portant les ailettes, et d'autre part, le pont dissipateur sur lequel est monté l'électronique de puissance. De plus, le pont dissipateur est également refroidit par conduction par les ailettes du palier arrière avec lesquelles il est en contact mécanique.

Cependant, dans un tel dispositif, il est nécessaire que le pont dissipateur, ou embase, soit bien plaqué contre le palier pour que le refroidissement de électronique de puissance puisse se faire. En effet, si un entrefer quelconque existe entre l'embase et la surface du palier, alors la conduction thermique ne se fait pas ou se fait mal entre l'embase et le palier et, par conséquent, le refroidissement de l'électronique de puissance n'est que partiel.

De plus, si le palier arrière est très chaud, il sera également difficile de refroidir par convection le pont dissipateur.

### Exposé de l'invention

Un but de l'invention est de remédier aux inconvénients des techniques exposées précédemment et propose un dispositif de refroidissement amélioré et plus fiable de l'électronique de puissance d'un alterno-démarreur de véhicule automobile, dans lequel le fluide de refroidissement est introduit latéralement dans la partie arrière de la machine et circule dans un passage d'écoulement du fluide formé entre le pont dissipateur et le palier arrière de l'alterno-démarreur.

- A cet effet, l'invention propose un alterno-démarreur pour véhicule automobile: tel que defini dans la revendication 1 à annexée.

Dans une forme de réalisation les moyens de refroidissement comportent des ailettes.

Dans une autre forme de réalisation les moyens de refroidissement comportent des colonnes par exemple de section circulaire ou en forme de losange.

Grâce à cette disposition on peut facilement usiner les extrémités libres des colonnes en sorte que ces colonnes, dans un mode de réalisation viennent en contact avec le palier arrière. Ces colonnes rigidifient le pont dissipateur de chaleur.

En variante la seconde face du pont dissipateur est profilée par exemple à la faveur d'une portion bombée, pour dévier le fluide et/ou pour créer un effet venturi.

Toutes les combinaisons sont possibles.

Par exemple les colonnes peuvent être combinées avec les ailettes, les moyens de refroidissement comportant en partie des colonnes et des ailettes.

Ainsi, les moyens de refroidissement étant mécaniquement solidaires du pont portant l'électronique de puissance, et non solidaires du palier arrière, le refroidissement de l'électronique de puissance est garanti quelque soit la chaleur produite par le palier arrière. En effet, le dispositif selon l'invention permet de réaliser un découplage thermique entre le palier arrière et le pont dissipateur en sorte que la chaleur ne peut pas se propager par conduction. De même, selon l'invention, le refroidissement par convection de la seconde face du pont dissipateur permet de refroidir une électronique de puissance comportant de nombreux composants électroniques.

L'invention est avantageusement complétée par les différentes caractéristiques suivantes, prises seules ou selon toutes leurs combinaisons possibles :
- les moyens de refroidissement, tels que les ailettes et/ou les colonnes, sont disposés radialement dans la direction du flux du fluide de refroidissement de manière à réduire les pertes de charge ;
- les moyens de refroidissement, tels que les ailettes et/ou les colonnes, forment des canaux de refroidissement radialement orientés de manière à bien refroidir le pont dissipateur sur toute son étendue radiale ;
- le palier arrière porte des déflecteurs placés en sortie des ouïes radiales du palier arrière afin que le fluide de refroidissement qui sort par les ouies radiales ou latérales du palier arrière ne soit pas repris par le flux entrant radialement du fluide de refroidissement. On évite ainsi un rebouclage du flux du fluide de refroidissement ;
- un capot de protection recouvre l'électronique de puissance et le pont dissipateur et comporte au moins une extrémité relevée pour former un déflecteur ;
- le capot de protection comporte au moins une ouverture pour le passage du fluide ;
- au moins un espace entre l'arbre de rotation et le pont dissipateur forme un passage axial d'écoulement du fluide ;
- le pont dissipateur forme une mezzanine au-dessus du palier arrière du stator ;
- le pont dissipateur est fixé sur le palier du stator par des tirants d'assemblage ;
- le pont dissipateur est fixé au-dessus du palier arrière par l'intermédiaire de plots solidaires du palier arrière ou du pont dissipateur ;
- une couche de matériau électriquement isolant est placée entre le pont dissipateur et le palier arrière ;
- les extrémités axiales des ailettes et/ou des colonnes solidaires du pont dissipateur sont situées à distance du palier arrière ;
- le dissipateur, comprenant les moyens de refroidissement, et le pont portant l'électronique de puissance sont monobloc ;
- le dissipateur, comprenant les moyens de refroidissement, est rapporté sur le pont portant l'électronique de puissance pour former un pont dissipateur en deux parties ;
- les composants de puissance sont placés sur des traces ;
- les traces sont solidaires du pont dissipateur de chaleur ;
- les traces sont isolées électriquement du pont dissipateur de chaleur.

Les colonnes et /ou les ailettes peuvent consister au moins en partie en des caloducs.

Dans une forme de réalisation le ventilateur arrière comprend au moins deux partie superposées, comme décrit par exemple dans le document FR A 2 741 912, pour augmentation du nombre de pales et de la puissance du ventilateur.

Les moyens de refroidissement selon l'invention comportent au moins une saillie dirigée vers le palier arrière et solidaire de la seconde face du pont.

### Brève description des figures

La figure 1, déjà décrite, représente la partie arrière d'un alternateur classique avec un dispositif de refroidissement classique.
La figure 2 représente la partie arrière d'un alterno-démarreur dans lequel l'introduction et la sortie du fluide de refroidissement se fait latéralement.
La figure 3 représente la partie arrière d'un alterno-démarreur avec la mezzanine sur laquelle est placée l'électronique de puissance.
Les figures 4 à 6, 8 et 10 sont des vues partielles de dessous de la face inférieure du pont dissipateur de chaleur tournée vers le palier arrière pour différents modes de réalisation.
La figure 7 est une vue de la section d'une colonne, constituant un moyen de refroidissement selon l'invention, pour une variante de réalisation.
Les figures 9 et 11 sont des vues en coupe selon les lignes IX-IX et XI-XI respectivement des figures 8 et 10.
La figure 12 est une vue partielle en coupe du montage du pont dissipateur sur le fond du palier arrière

### Description détaillée de modes de réalisation de l'invention

Dans ces figures les éléments communs seront affectés des mêmes signes de référence.

La figure 2 représente une vue de coté en coupe de l'arrière d'un alterno-démarreur comportant un dispositif de refroidissement selon l'invention. Comme tous les alterno-démarreurs connus, l'alterno-démarreur représenté sur la figure 2 comporte un rotor 1 fixé sur un arbre de rotation 2 d'axe A. Ce rotor 1 est entouré du stator 3 doté d'un corps 8 sous la forme d'un paquet de tôles à encoches traversées par les enroulements du bobinage induit 7. Le stator 3 est supporté par le palier arrière 4 et le palier avant (non représenté), qui maintient l'arbre de rotation 2 par l'intermédiaire de roulements 6. Le rotor est par exemple un rotor à griffes, comme décrit dans les documents DE A 197 05 228 ou EP A 0515 259 auxquels on se reportera pour plus de précisions. En variante ce rotor est à pôles saillants par exemple du type hybride à pôles saillants, qui alternent circonférentiellement avec des aimants permanents comme d écrit dans le document WO 02/054566 auquel on se reportera.

Comme expliqué précédemment, l'alterno-démarreur comporte un pont redresseur à transistors de puissance MOS, associé à des unités de commande, dits drivers, de ces transistors de puissance. Ce pont redresseur et ces unités de commande forment ensemble l'électronique de puissance, dit circuit électronique de puissance de l'alterno-démarreur, référencée 15 sur la figure 2. Cette électronique ou circuit de puissance 15 est montée sur la face supérieure, dite première face, d'un pont dissipateur de chaleur 16 décrit ci-après.

Selon l'invention, la face inférieure, dite seconde face, axialement orientée vers le palier arrière 4 de la machine électrique de ce pont dissipateur de chaleur 16 forme une paroi d'un passage longitudinal, ou radial, d'écoulement 17 du fluide de refroidissement dans l'alterno-démarreur. L'autre paroi de ce passage 17 est donc formée par la face supérieure du palier arrière 4 décrit ci-après.

Selon l'invention, le capot de protection 11 comporte des ouvertures 19 situées en regard du passage d'écoulement 17. Ces ouvertures communiquent avec la périphérie externe du passage 17. De cette façon, le fluide de refroidissement, en particulier l'air, est introduit dans l'arrière de l'alterno-démarreur par ces ouvertures 19 puis circule dans le passage 17, sous le pont dissipateur 16, refroidissant l'électronique de puissance 15. Un ventilateur arrière 5, fixé sur l'arbre de rotation 2 ou sur le rotor 1, assure l'aspiration de l'air à l'intérieur du passage 17. Les ouvertures 19 sont avantageusement réparties circonférentiellement de manière régulière à la périphérie externe du capot 11.

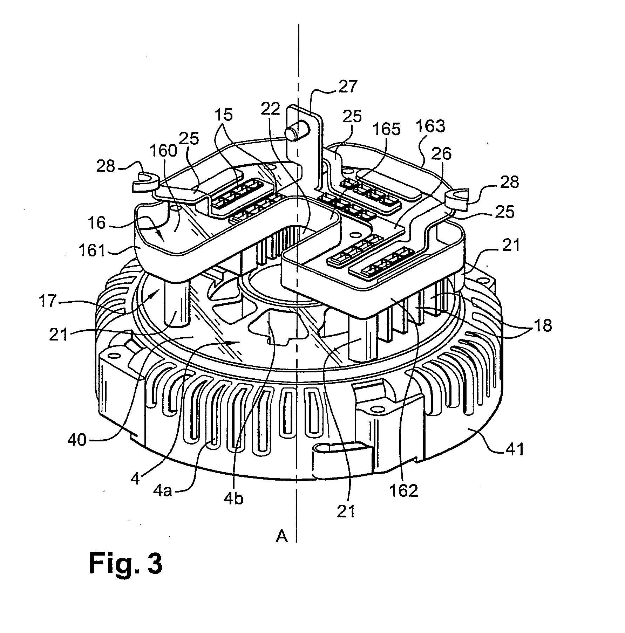

Ainsi réalisé, le pont dissipateur 16 de chaleur forme une mezzanine au-dessus du palier arrière 4. La figure 3, qui représente une vue de profil de dispositif de refroidissement de l'invention, montre bien cette mezzanine. Cette figure 3 sera décrite en détail ultérieurement.

Selon l'invention, le pont dissipateur 16 comporte, sur sa face inférieure, des moyens de refroidissement 18.

Autrement dit la face inférieure du pont 16 est configurée pour former des moyens de refroidissement 18.

Ces moyens de refroidissement 18 sont disposés dans le passage 17 et assurent l'écoulement du fluide de refroidissement selon un chemin choisi, c'est-à-dire de façon à ce que le fluide pénètre au plus près de l'arbre de rotation pour lécher au mieux la face inférieure du pont dissipateur. Ainsi la face inférieure du pont dissipateur est refroidie sur toute la distance radiale située entre la périphérie externe et la périphérie interne proche de l'arbre, du pont dissipateur.

A la figure 3 le dissipateur 16 présente une forme de U. Ce dissipateur 16 présente donc deux branches 161, 162 et une tête 163 reliant entre elles les branches 161, 162.

Un passage axial central 22, délimitant la périphérie interne du dissipateur, est présent entre les deux branches 161, 163. Ce passage est délimité également par la périphérie interne 165 de la tête 163. Ce passage central 22 est traversé par l'axe A et est dimensionné pour être supérieur à la taille de l'arbre 2.

Grâce à ce passage 22 le fluide pénètre au plus près de l'arbre 2 de manière décrite ci-après.

Dans cette figure 3 ce dissipateur est de forme creuse en sorte qu'il présente un fond 160 en forme de U, dont le pourtour est délimité par un rebord 166 ici perpendiculaire au fond 160 d'orientation transversale par rapport à l'axe A.

Le passage axial 22 est ainsi en forme de canal.

Dans les figures 2 et 3 les moyens de refroidissement consistent en des ailettes de refroidissement 18.

Les ailettes adjacentes forment des canaux radiaux guidant le fluide de refroidissement dans le passage 17 communiquant avec le passage 22.

Ces canaux sont évasés en allant de la périphérie interne du dissipateur 16 à la périphérie externe de celui-ci. Ces périphéries interne et externe du dissipateur 16 délimitent le passage 17 en association avec le palier arrière 4. Les ailettes sont ici d'orientation radiale par rapport à un centre définit par l'axe A et ont ici une hauteur constante.

Ainsi, ces canaux comportent une face inférieure formée par le palier arrière, les deux cotés en regard de deux ailettes adjacentes ainsi que le fond 160 en U du pont dissipateur formé entre deux ailettes adjacentes. Avantageusement le dissipateur, comprenant les ailettes, et le pont portant l'électronique de puissance sont monoblocs formant ainsi un pont dissipateur monobloc.

Les ailettes sont par exemple venues de moulage avec le pont dissipateur et sont avantageusement fines pour augmenter le nombre ce celles-ci et améliorer la surface d'échange thermique ici avec l'air.

En variante, le dissipateur peut être rapporté sur le pont portant l'électronique de puissance formant ainsi un pont dissipateur en deux parties. Ce fluide s'évacue ensuite par des ouïes 4a - 4d réalisées dans le palier arrière 4. Ces ouïes 4a - 4d sont, de préférence, identiques à celles réalisées dans un palier d'alternateur, comme celui montré sur la figure 1. Avantageusement, les ailettes 18 sont disposées radialement dans la direction du flux du fluide se concentrant vers les ouïes centrales 4b et 4c du palier arrière 4 de forme creuse.

Plus précisément ce palier 4 comporte un fond 40 troué centralement pour passage de l'arbre 2. Ce fond présente un logement pour le montage du roulement à billes 6 de support de l'arbre 2 et est prolongé à sa périphérie externe par un rebord annulaire 41. Le fond 40 et le rebord 41 sont respectivement d'orientation transversale et d'orientation axiale par rapport à l'axe A.

La face supérieure précitée du palier 4 est donc constituée par la face supérieure du fond 40, qui constitue l'une des parois du passage 17.

Le rebord 41 porte intérieurement le corps 8 du stator 3.

Les ouïes centrales 4b, 4c appartiennent au fond 40, tandis que les autres ouïes, à savoir les ouïes latérales ou radiales 4a, 4d, appartiennent au rebord 41.

Dans cette figure 3 on a référencé que l'une 4b des ouïes centrales et l'une 4a des ouïes latérales. Les ouïes centrales, proche de l'ouverture centrale du fond 40, sont en forme de fenêtre, tandis que les ouïes latérales sont de forme oblongue et implantées radialement au dessus de la partie, appelée chignon, des enroulements du bobinage d'induit 7 saillante par rapport au corps 8. Grâce à ces ouïes latérales le bobinage est donc bien refroidit.

Ainsi, dans l'invention, l'air (ou tout autre fluide de refroidissement) est aspiré latéralement par les ouvertures 19 dans l'alterno-démarreur et s'écoule vers les ouïes centrales 4b et 4c du palier 4 tout en léchant les éléments de refroidissement du pont dissipateur, c'est-à-dire les ailettes 18, sur toute leur longueur avant de s'évacuer par les ouïes latérales 4a et 4d du palier 4. Ainsi, l'électronique de puissance 15, plus précisément les composants de celle-ci, est refroidie par conduction, après refroidissement du pont dissipateur 16, via les moyens de refroidissement 18 ici en forme d'ailettes 18.

En outre, comme le pont dissipateur 16 et l'électronique ou circuit électronique de puissance 15 sont à distance de l'arbre de rotation. Il existe, entre cet arbre de rotation 2 et le pont dissipateur 16, un espace 22 par lequel l'air peut également circuler. Cet espace 22 forme un canal axial d'écoulement du fluide. Selon un mode de réalisation de l'invention des ouïes centrales 23a et 23b sont réalisées dans le capot de protection 11. De l'air est alors aspiré par ces ouïes 23a et 23b dans l'alterno-démarreur, puis s'écoule par l'espace 22 le long de l'arbre de rotation 2 et rejoint le passage d'écoulement 17 sous le pont dissipateur 16. De cette façon, l'électronique de puissance est refroidie, d'une part, latéralement par le passage 17 et, d'autre part, axialement par l'espace 22. Cet écoulement d'air axial supplémentaire transitant par l'espace 22 permet en outre d'obtenir un bien meilleur refroidissement des parties internes de l'alternateur, telles que les roulements à billes 6 et les chignons des enroulements du bobinage d'induit 7, par une augmentation du débit d'air global dans la machine.

Le chemin de l'écoulement du fluide de refroidissement à l'arrière de l'alterno-démarreur est représenté par des flèches et des traits pointillés, sur la figure 2.

Selon un mode de réalisation préféré de l'invention, des déflecteurs 24 sont placés en aval des ouïes 4a et 4d réalisées dans le palier arrière 4, plus précisément à la figure 2 axialement en aval du bord arrière 42 des ouïes 4a et 4d proche du fond 40. Ces déflecteurs 24 permettent d'éloigner le flux de fluide d'entrée du flux de fluide de sortie afin que le fluide sortant de l'alterno-démarreur ne soit pas réintroduit immédiatement dans le passage 17. On évite ainsi une recirculation importante du fluide chaud provenant de l'intérieur de l'alterno-démarreur.

Ces déflecteurs 24, placés en sortie des ouïes latérales 4a et 4d du palier 4, sont portés par le palier arrière. Ainsi dans un mode de réalisation les déflecteurs peuvent d'être fixés sur le palier 4, à proximité des ouïes latérales 4a et 4d du palier. Ils peuvent également être portés par le palier arrière en étant réalisés dans le capot de protection 11, par exemple, en relevant l'extrémité libre du capot de protection, comme représenté sur la figure 2.

Ce capot, porté par le palier 4 et avantageusement en matière plastique, est de forme creuse comme le palier arrière 4. Il comporte donc (figure 2) un fond 110, d'orientation transversale par rapport à l'axe A, prolongé à sa périphérie externe par un rebord 111 annulaire d'orientation axiale par rapport à l'axe A.

Les ouïes centrales 23a et 23b sont réalisées dans le fond 110, tandis que les ouvertures 19, en forme d'ouïes, sont réalisées dans le rebord 111.

Les déflecteurs 24 sont ici reliés ensembles pour former l'extrémité libre du rebord 111 de forme évasée, ce qui rend aisé le montage du capot sur le rebord du palier arrière. La base 124 de cette extrémité 24, facilitant le montage du capot 11, est implantée axialement, ici légèrement, en retrait par rapport au bord avant 43 des ouïes 4a, 4b. Cette base 124 est donc implantée axialement entre les bords 42, 43. En variante l'extrémité libre du rebord comporte une alternance de portions évasées, c'est-à-dire relevées, à la sortie des ouïes 4a, 4b et de portions non relevées ou chanfreinées pour faciliter le montage du capot. En variante le rebord 111 du capot présente un rebord saillant radialement et profilé en fonction du carter du moteur du véhicule pour former un déflecteur. Ce rebord, ; formant un moyen de cloisonnement, est placé en amont des ouïes et en aval des ouvertures comme décrit dans le document EP A 0 740 400.

Dans le mode de réalisation de l'invention représenté sur la figure 2, le capot de protection 11 enveloppe toute la partie arrière de l'alterno-démarreur, c'est-à-dire qu'il enveloppe l'électronique de puissance 15 montée sur le pont dissipateur 16 et la totalité du palier arrière 4. Dans ce cas, le capot de protection 11 peut comporter des ouïes situées en aval des ouïes latérales du palier arrière et destinées à laisser s'évacuer le fluide hors de l'alterno-démarreur. Il peut aussi comporter, en plus ou à la place de ces ouïes, un ou des déflecteurs 24 en regard des ouies latérales 4a, 4d. Ceux-ci peuvent être réalisés dans le capot lui-même.

Le capot de protection 11 peut aussi envelopper l'électronique de puissance montée sur le pont dissipateur et la partie supérieure du palier 4, c'est-à-dire qu'il n'enveloppe pas les cotés latéraux du palier comportant les ouïes 4a et 4d. Dans ce cas, les déflecteurs peuvent être fixés sur le palier 4 ou bien réalisés en relevant l'extrémité libre du capot.

Selon une caractéristique, le pont dissipateur 16 est fixé sur le palier arrière 4 au moyen de tirants ou de boulons d'assemblage 20. Selon un mode de réalisation, les tirants ou boulons d'assemblage, d'une manière générale les moyens d'assemblage 20, sont les même que ceux utilisés pour fixer habituellement le palier 4 avec le circuit magnétique 8 du stator 3, c'est-à-dire les même tirants que ceux montrés sur la figure 1. Ces tirants, par exemple sous la forme de vis longues, sont visibles par exemple à la figure 1 du document EP A 0515 259.

Dans un autre mode de réalisation de l'invention, le pont dissipateur 16 est fixé sur le palier 4 au moyen de plots 21 de fixation. Ces plots de fixation peuvent être solidaires du pont dissipateur 16 ou bien du palier 4.

Sur la figure 3, on a représenté, de profil, le dispositif de refroidissement de l'alterno-démarreur, seul. Autrement dit, le rotor, le stator et l'arbre de rotation ne sont pas représentés sur cette figure 3. On voit donc sur cette figure 3, le palier arrière 4 avec le pont dissipateur 16 qui forme une mezzanine au-dessus du palier 4. Dans le mode de réalisation de cette figure, la mezzanine est fixée sur le palier 4 au moyen de plots de fixation 21. Ces plots de fixation sont au moins au nombre de deux. Ils sont répartis entre les ailettes 18. Les plots 21 sont implantés au voisinage de la périphérie externe du flasque 40, c'est à dire radialement au dessus des ouïes centrales 4b.

Sur cette figure 3, on voit bien que les ailettes 18 sont axialement plus courtes que les plots et qu'elles ne sont pas en contact physique, ni en contact électrique, avec le palier arrière 4. Par exemple, un espace de 2 mm peut séparer les extrémités axiales des ailettes 18 et le fond 40 du palier arrière 4.

Dans l'exemple de la figure 3, le pont dissipateur 16 constitue environ le 3/4 de la surface du fond du palier 4, autour de l'arbre de rotation. Sur la face supérieure de ce pont 16, les composants 15 constituent l'électronique de puissance de l'alterno-démarreur. Il est à noter que la surface du pont dissipateur peut varier en fonction du nombre et de la taille des composants à monter.

Avec la disposition du dispositif de refroidissement qui vient d'être décrit, il est possible de connecter l'alternateur et le pont redresseur, chacun, à une masse qui peut être différente pour l'un et pour l'autre.

De plus, la machine électrique peut comporter une couche de matériau électriquement isolant, placée entre la face inférieure du pont dissipateur et le palier arrière, pour éviter tout risque de contact électrique entre ces deux éléments. Avantageusement, cette couche de matériaux isolant est fixée sur la face externe du palier arrière et comporte également des ouies de passage d'air en regard avec celles du palier arrière pour le passage du fluide de refroidissement.

Par exemple on fait appel à un substrat métallique isolé consistant en une semelle métallique recouverte d'un isolant polymère puis d'une feuille de matériau conducteur, tel que du cuivre, qui est ensuite gravé pour former le circuit électrique isolé. Ensuite on interpose de l'alumine entre le dissipateur et le substrat isolé. Pour plus de précisions on se reportera au document EP A 1 032 114.

Ici une unique trace 26 porte les composants électroniques en forme de puces, dites puces positives, définissant les demi ponts positifs comme décrit dans le document EP A 1 032114 précité. Cette trace 26, en forme de U, est prolongée par une languette 27 conformée pour formée la borne positive de l'alterno-démarreur. Les traces 25 portent chacune les puces, dites puces négatives, définissant un demi-pont négatif et sont conformées pour présenter chacune une patte de sertissage 28 servant à la fixation de l'enroulement concerné du bobinage d'induit. Les puces, telles que des transistors du type MOSFET, sont reliées par des liaisons filaires. Les puces négatives sont reliées à la masse. La borne négative est non visible. Néanmoins avantageusement on isole électriquement le pont du palier arrière pour éviter des perturbations lorsque l'alternateur fonctionne en mode moteur électrique.

Tout cela dépend des applications.

Bien entendu la présente invention n'est pas limitée aux exemples de réalisations décrits.

En particulier des dispositions peuvent être adoptées pour réduire les pertes de charge dans le passage 17 et éviter, notamment des recirculations de fluide à l'intérieur de celui-ci

Ainsi en variante les ailettes 18 sont axialement de hauteur décroissante. Par exemple les ailettes 18 sont plus hautes axialement à la périphérie interne du passage 17 qu'à la périphérie externe du passage 17 pour avoir une vitesse d'écoulement de l'air la plus constante possible.

En variantes entre deux ailettes consécutives appartenant à une première série d'ailettes s'étendant de la périphérie externe à la périphérie interne du passage 17, il est prévu au moins une ailette radialement plus courte.

En variante certaines au moins des ailettes 18 sont fendues en sorte qu'une circulation d'air est créer entre les deux faces d'une ailette 18 allant du côté ou la pression statique est la plus forte vers le côté ou elle est la plus faible. On empêche ainsi un décollement de la couche limite du fluide de refroidissement ici de l'air, et des recirculations de ce fluide en sens inverse.

Les pertes de charge sont ainsi diminuées et le refroidissement du pont dissipateur16 est amélioré.

Les fentes sont droites ou inclinées par rapport au fond 160 du dissipateur 16. Les ailettes sont ainsi dans une variante fractionnées en au moins deux parties.

Les ailettes peuvent avoir une forme sinueuse.

Certaines au moins des ailettes peuvent être remplacées par des colonnes en sorte que les moyens de refroidissement peuvent comporter des ailettes et des colonnes.

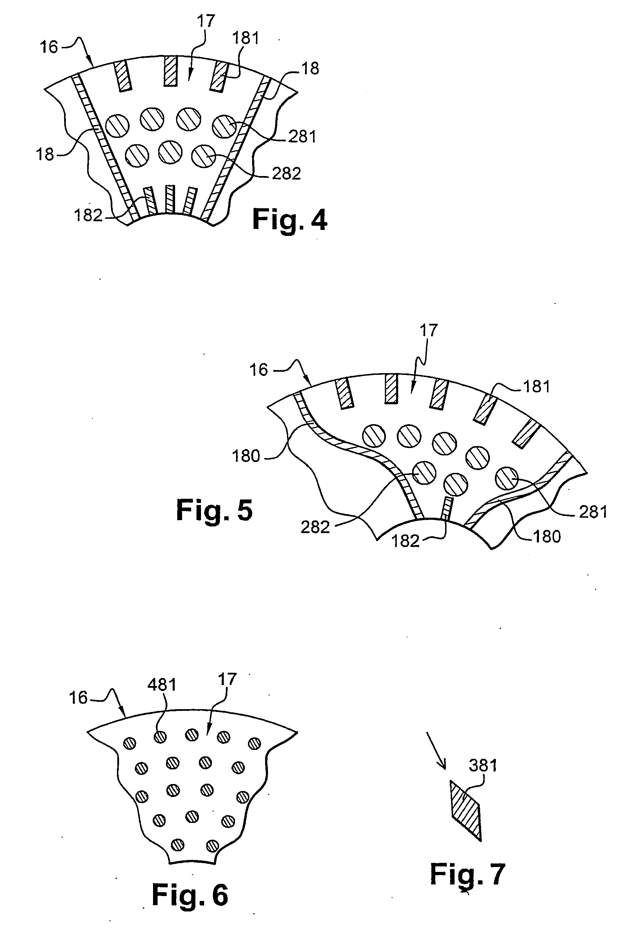

Toutes les combinaisons sont possibles comme visible dans les figures 4 à 12.

Ainsi à la figure 4 on voit en 18 deux ailettes d'orientation radiale délimitant un canal du passage 17 selon l'invention. Entre ces deux ailettes 18 consécutives appartenant à une première série d'ailettes on trouve au moins une ailette 181, ici trois ailettes, appartenant à une seconde série d'ailettes radialement plus courtes.

Les ailettes 181 sont implantées à la périphérie externe du passage 17. Des ailettes coutres182 sont implantées à la périphérie interne du passage 17 entre les deux ailettes consécutives 18. Ces ailettes, ici au nombre de trois, sont globalement radialement alignées avec les ailettes 181 en sorte que des fentes existent entre les ailettes 181, 182 globalement radialement alignées.

Ces fentes sont dans un mode de réalisation de largeur faible. Ici les fentes sont de largeur importante en sorte que deux rangées circonférentielles 281, 282 de colonnes sont implantées radialement entre les ailettes 181 et 182. Ces colonnes sont implantées sur deux circonférence et sont ici de section circulaire, en variante de section de forme ovale ou en forme de losange, comme visible en 381 à la figure 7 dans laquelle on a représenté par une flèche le chemin de l'air. Ces ailettes sont montées en quinconce.

En variante, comme visible à la figure 5, les ailettes consécutives 180 de la première série d'ailettes ont une forme sinueuse, ici incurvée, pour créer un effet Venturi et optimiser la vitesse de l'écoulement d'air.

Dans ce cas le nombre d'ailettes 182, 282 est réduit, tandis que le nombre d'ailettes 181, 281 est augmenté. L'entrée du passage 17 entre les ailettes 18 à circonférentiellement une dimension supérieure à la sortie de ce passage.

Toutes ces dispositions permettent d'améliorer la surface d'échange thermique du dissipateur avec l'air et de bien gérer l'écoulement d'air sous l'électronique de puissance. En outre cela facilite la fabrication du pont 16 car ce pont ne fait pas appel uniquement à des ailettes fines.

Bien entendu les moyens de refroidissement peuvent comporter uniquement des colonnes 481 comme visible à la figure 6.

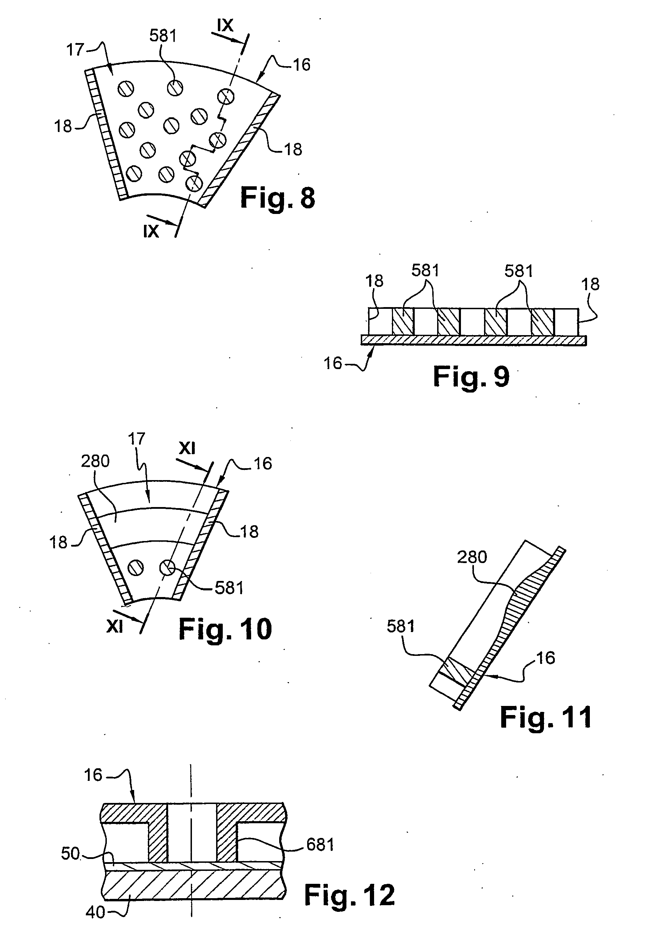

Ces colonnes, ici de section circulaire peuvent être radialement alignées ou être circonférentiellement décalées comme les colonnes des rangées 281, 282 de la figure 4 et comme visible en 581 à la figure 8. En variante les colonnes sont de section rectangulaire. Cela revient dans ces cas à fractionner chaque ailette 18 en une pluralité de parties séparées les unes des autres par des fentes.

On appréciera que les colonnes renforcent la tenue mécanique du dissipateur. Avec des colonnes il devient possible d'usiner les extrémités libres de celles-ci en sorte que dans un mode de réalisation les colonnes sont en contact avec le fond 40 du palier 4. Ce contact est direct ou en variante indirecte une couche thermiquement isolante, visible par exemple en 50 à la figure 12, étant interposée entre les extrémités libres des colonnes et le fond 40 du palier arrière 4.

Certaines de ces colonnes peuvent constituer les plots 21 de la figure 3, en sorte qu'un jeu peut exister entre le fond 40 du palier 4 et les extrémités libres de ces autres colonnes.

Bien entendu le fond du dissipateur 16, plus précisément la face inférieure de celui-ci tournée vers le fond du palier arrière, peut comporter au moins une portion bombée comme visible en 280 dans les figures 10 et 11, pour dévier l'air et créer un effet Venturi dans le passage 17 pour optimiser la vitesse d'écoulement de l'air.

Cette disposition est une autre forme des moyens de refroidissement selon l'invention.

Les colonnes dans un mode de réalisation n'ont pas la même section.

Certaines des colonnes peuvent être intérieurement creuse, comme visible en 681 à la figure 12, en sorte que cette colonne constitue un des plots de fixation 21 de la figure 3. Ce plot peut être traversé par les tirants ou les vis d'assemblage 20 de la figure 2.

Certaines de ces colonnes peuvent consister en des caloducs présentant une zone de condensation implantée dans le passage 17 et une zone d'évaporation absorbant de la chaleur et en contact avec la face inférieure du dissipateur 16.

Ce caloduc est intérieurement creux et est doté d'une enceinte renfermant un fluide sous pression, tel que de l'eau. L'enceinte du caloduc est par exemple en cuivre ou en acier inoxydable ou en nickel. Ce caloduc prélève de la chaleur au niveau du dissipateur en passant d'un état liquide à un état gazeux. Il restitue la chaleur dans le passage 17.

Bien entendu le dissipateur 16 est en variante en forme de fer à cheval ou en forme de couronne.

Les branches de ce pont peuvent former des modules avec leur driver associé. D'une manière générale le circuit électronique de puissance 15 comporte plusieurs composants et plusieurs parties.

Un ou plusieurs driver peuvent être prévu. Par exemple il existe un unique driver pour commander toutes les puces constituant des interrupteurs commandés. En variante il existe un driver par puce à commander ou un driver par branche du pont. Le dissipateur porte ainsi dans un mode de réalisation toute la partie de puissance de l'unité de commande et de contrôle de l'alterno démarreur, c'est-à-dire les puces et le ou les drivers. La partie de contrôle et de gestion, ainsi que le régulateur de tension pilotant le bobinage d'excitation du rotor étant montés dans un boîtier externe.

Le montage du circuit électronique 15 sur le pont dissipateur peut être réalisé comme décrit dans le document WO 03/051095 auquel on se reportera. Ainsi ce circuit comporte des traces métalliques, par exemple en cuivre destinées à recevoir les puces. On injecte de la résine, par exemple du type thermoplastique en laissant apparaître, grâce à un moule, des parties accessibles au niveau des faces inférieures et supérieures des traces pour notamment montage des puces sur la face supérieure des traces. La face inférieure accessible des traces est au droit des puces.

Ensuite on interpose un élément conducteur de chaleur entre et isolant électrique entre les traces et le dissipateur 16. Cet élément peut être de la résine époxy ou polyamide présentant des faces adhésives. En variante il s'agit d'une colle thermoconductrice comportant des billes de verre.

Ensuite on monte un capot de protection.

On appréciera que le palier arrière n'est pas modifié de manière profonde par rapport à celui de la figure 1. Ce palier est dépourvu de logement pour monter des diodes négatives et comporte éventuellement des plots pour fixation du pont.

Les moyens de refroidissements sont ici du type mécanique et comportent au moins une saillie appartenant à la seconde face du dissipateur 16 et montée dans le passage 17.

## Revendications

1. **Alterno-démarreur de véhicule automobile** comportant :
un palier arrière (4),
- un rotor (1) centré et fixé sur un arbre de rotation (2) supporté par au moins le palier arrière (4),
- le palier arrière (4) comportant des ouies radiales (4a, 4d) de sortie d'un fluide de refroidissement,
- un stator (3) entourant le rotor,
- le stator comportant un bobinage d'induit (7) comprenant des enroulements constituant des phases de la machine électrique
- un circuit électronique (15) de puissance connecté aux enroulements des phases du stator **et comportant des composants électroniques de puissance placés sur des traces (25)**,
- un pont dissipateur de chaleur (16) comportant d'une part une première face sur laquelle est monté le circuit électronique de puissance, et d'autre part, une seconde face, opposée à ladite première face et orientée vers le palier arrière,
- ladite seconde face formant une paroi longitudinale d'un passage (17) d'écoulement de fluide de refroidissement, une autre paroi longitudinale de ce passage (17) étant formée par le palier arrière (4) supportant le stator
**caractérisé en ce que le pont dissipateur forme une pièce surélevée (16) au-dessus du palier arrière (4)** et la seconde face du pont dissipateur de chaleur (16) comporte des moyens de refroidissement (18) disposés dans le passage (17) d'écoulement du fluide **et destinés au refroidissement desdits composants électroniques de puissance, et en ce que lesdites traces (25) sur lesquelles sont placés lesdits composants électroniques de puissance sont solidaires du pont dissipateur de chaleur.**

2. Alterno-démarreur de véhicule automobile selon la revendication 1, **caractérisée en ce que** les moyens de refroidissement (18) sont disposées radialement dans la direction du flux du fluide de refroidissement.

3. Alterno-démarreur de véhicule automobile selon la revendication 1 ou 2, **caractérisée en ce que** les moyens de refroidissement comportent des ailettes de refroidissement (18).

4. Alterno-démarreur de véhicule automobile selon la revendication 3, **caractérisée en ce que** les ailettes de refroidissement (18) forment des canaux de refroidissement radialement orientés.

5. Alterno-démarreur de véhicule automobile selon l'une quelconque des revendications précédentes, **caractérisé en ce que** les moyens de refroidissement comportent des colonnes (281, 282, 481, 381, 481, 581, 681).

6. Alterno-démarreur de véhicule automobile selon la revendication 5, **caractérisé en ce que** les moyens de refroidissement comportent des ailettes et des colonnes.

7. Alterno-démarreur de véhicule automobile selon la revendication 6, **caractérisé en ce que** certaines au moins des ailettes ont une forme sinueuse pour créer un effet Venturi.

8. Alterno-démarreur de véhicule automobile selon l'une quelconque des revendications 5 à 7, **caractérisé en ce que** certaines des colonnes (681) constituent des plots de fixation du dissipateur de chaleur (16) au palier arrière (4).

9. Alterno-démarreur de véhicule automobile selon l'une quelconque des revendications 3 à 8, **caractérisé en ce que** les colonnes et/ou les ailettes peuvent consister au moins en partie en des caloducs.

10. Alterno-démarreur de véhicule automobile selon l'une quelconque des revendications précédentes, **caractérisé en ce que** les moyens de refroidissement sont formés à la faveur d'au moins une portion bombée (280) de la seconde face du dissipateur.

11. Alterno-démarreur de véhicule automobile selon l'une quelconque des revendications 3 à 10, **caractérisé en ce que** les extrémités axiales des ailettes solidaires du pont dissipateur sont situées à distance du palier arrière.

12. Alterno-démarreur de véhicule automobile selon l'une quelconque des revendications précédentes, **caractérisé en ce que** le palier arrière comporte un fond (40) formant l'une des parois du passage (17) d'écoulement du fluide, **en ce que** ce fond (40) est prolongé à sa périphérie externe par un rebord (41) doté d'ouïes latérales (4a - 4d), et **en ce que** le palier arrière porte au moins un déflecteur (24) placés en sortie des ouïes latérales (4a - 4d) du rebord (41) du palier arrière (4).

13. Alterno-démarreur de véhicule automobile selon la revendication 12. **caractérisé en ce qu'**elle comporte un capot de protection (11) de forme creuse recouvrant le circuit électronique de puissance (15) et le pont dissipateur (16) et **en ce que** le déflecteur (24) est formé à extrémité libre du capot (11).

14. Alterno-démarreur de véhicule automobile selon larevendication 13. **caractérisé en ce que** l'extrémité libre (24) du capot (11) est évasée pour former le déflecteur.

15. Alterno-démarreur de véhicule automobile selon la revendication 13 ou 14, **caractérisé en ce que** le capot de protection (11) comporte au moins une ouverture (19) communiquant avec le passage (17) d'écoulement du fluide de refroidissement.

16. Alterno-démarreur de véhicule automobile selon l'une quelconque des revendications précédentes, **caractérisé en ce qu'**elle comporte au moins un espace entre l'arbre de rotation du rotor et le pont dissipateur formant un passage axial d'écoulement du fluide.

17. Alterno-démarreur de véhicule automobile selon l'une quelconque des revendications précédentes, **caractérisée en ce que** le pont dissipateur est fixé sur le palier arrière (4) par des tirants d'assemblage (20).

18. Alterno-démarreur de véhicule automobile selon la revendication 18, **caractérisé en ce que** le pont dissipateur est fixé au-dessus du palier arrière par l'intermédiaire de plots (21) solidaires du pont dissipateur.

19. Alterno-démarreur de véhicule automobile selon l'une quelconque des revendications précédentes, **caractérisé en ce qu'**elle comporte une couche de matériau électriquement isolant entre le pont dissipateur et le palier arrière.

20. Alterno-démarreur de véhicule automobile selon l'une quelconque des revendications précédentes, **caractérisé en ce que** le pont dissipateur, comprenant les moyens de refroidissement, et le pont portant te circuit électronique de puissance sont monoblocs.

21. Alterno-démarreur de véhicule automobile selon l'une quelconque des revendications précédentes, **caractérisé en ce que** les traces (25) sont isolées électriquement du pont dissipateur de chaleur.

## Claims

1. **Alternator-starter for a motor vehicle** comprising:
a rear bearing (4),
- a rotor (1) centred and fixed to a rotation shaft (2) supported by at least the rear bearing (4),
- the rear bearing (4) having radial louvres (4a, 4d) for the outlet of a coolant,
- a stator (3) surrounding the rotor,
- the stator comprising an induction coil (7) having windings forming the phases of the electrical machine
- a power electronic circuit (15) connected to the windings of the phases of the stator and **comprising power electronic components placed on tracks (25)**,
- a heat-dissipating bridge (16) comprising on the one hand a first face on which is mounted the power electronic circuit, and on the other hand a second face, opposite to said first face and oriented towards the rear bearing,
- said second face forming a longitudinal wall of a passage (17) for the flow of coolant, another longitudinal wall of this passage (17) being formed by the rear bearing (4) supporting the stator **characterized in that the dissipating bridge forms a raised part (16) above the rear bearing (4) and** the second face of the dissipating bridge (16) includes cooling means (18) arranged in the fluid flow passage (17) **and intended for the cooling of said power electronic components, and in that said tracks (25) on which said power electronic components are placed are attached to the heat-dissipating bridge.**

2. Alternator-starter for a motor vehicle according to Claim 1, **characterized in that** the cooling means (18) are arranged radially in the direction of the flow of the coolant.

3. Alternator-starter for a motor vehicle according to Claim 1 or 2, **characterized in that** the cooling means include cooling fins (18).

4. Alternator-starter for a motor vehicle according to Claim 3, **characterized in that** the cooling fins (18) form radially oriented cooling channels.

5. Alternator-starter for a motor vehicle according to any one of the preceding claims, **characterized in that** the cooling means include columns (281, 282, 481, 381, 481, 581, 681).

6. Alternator-starter for a motor vehicle according to Claim 5, **characterized in that** the cooling means include fins and columns.

7. Alternator-starter for a motor vehicle according to Claim 6, **characterized in that** at least some of the fins have a winding shape to create a Venturi effect.

8. Alternator-starter for a motor vehicle according to any one of Claims 5 to 7, **characterized in that** some of the columns (681) form pins for fixing the heat dissipater (16) to the rear bearing (4).

9. Alternator-starter for a motor vehicle according to any one of Claims 3 to 8, **characterized in that** the columns and/or the fins may consist at least partly of heat pipes.

10. Alternator-starter for a motor vehicle according to any one of the preceding claims, **characterized in that** the cooling means are formed with the help of at least a bulging portion (280) of the second face of the dissipater.

11. Alternator-starter for a motor vehicle according to any one of Claims 3 to 10, **characterized in that** the axial ends of the fins attached to the dissipating bridge are situated at a distance from the rear bearing.

12. Alternator-starter for a motor vehicle according to any one of the preceding claims, **characterized in that** the rear bearing comprises a bottom (40) forming one of the walls of the passage (17) for the flow of the fluid, **in that** this bottom (40) is extended at its outer periphery by a flange (41) provided with lateral louvres (4a - 4d) and **in that** the rear bearing supports at least one deflector (24) placed at the outlet of the lateral louvres (4a - 4d) of the flange (41) of the rear bearing (4).

13. Alternator-starter for a motor vehicle according to Claim 12, **characterized in that** it comprises a protective cover (11) of hollow form covering the power electronic circuit (15) and the dissipating bridge (16) and **in that** the deflector (24) is formed at the free end of the cover (11).

14. Alternator-starter for a motor vehicle according to Claim 13, **characterized in that** the free end (24) of the cover (11) is flared to form the deflector.

15. Alternator-starter for a motor vehicle according to Claim 13 or 14, **characterized in that** the protective cover (11) includes at least one opening (19) communicating with the passage (17) for the flow of the coolant.

16. Alternator-starter for a motor vehicle according to any one of the preceding claims, **characterized in that** it comprises at least one space between the rotation shaft of the rotor and the dissipating bridge forming an axial passage for the flow of the coolant.

17. Alternator-starter for a motor vehicle according to any one of the preceding claims, **characterized in that** the dissipating bridge is fixed to the rear bearing (4) by joining tie rods (20).

18. Alternator-starter for a motor vehicle according to Claim 17, **characterized in that** the dissipating bridge is fixed above the rear bearing via pins (21) attached to the dissipating bridge.

19. Alternator-starter for a motor vehicle according to any one of the preceding claims, **characterized in that** it includes a layer of electrically insulating material between the dissipating bridge and the rear bearing.

20. Alternator-starter for a motor vehicle according to any one of the preceding claims, **characterized in that** the dissipating bridge, comprising the cooling means, and the bridge bearing the power electronic circuit are of single-piece construction.

21. Alternator-starter for a motor vehicle according to any one of the preceding claims, **characterized in that** the tracks (25) are electrically insulated from the heat-dissipating bridge.

## Patentansprüche

1. Starter-Generator für Kraftfahrzeug, mit:
- einem hinteren Lager (4),
- einem Rotor (1), der auf eine Drehwelle (2), die wenigstens durch das hintere Lager (4) unterstützt ist, zentriert ist und daran befestigt ist,
- wobei das hintere Lager (4) radiale Öffnungen (4a, 4d) für den Austritt eines Kühlungsfluids aufweist,
- einem Stator (3), der den Rotor umgibt,
- wobei der Stator eine Induktionsspule (7) aufweist, die Wicklungen enthält, die die Phasen der Elektromaschine bilden,
- einer elektronischen Leistungsschaltung (15), die mit den Wicklungen der Phasen des Stators verbunden ist und elektronische Leistungskomponenten aufweist, die auf Bahnen (25) angeordnet sind,
- einer Wärmeabführungsbrücke (16), die einerseits eine erste Fläche, auf der die elektronische Leistungsschaltung montiert ist, und andererseits eine zweite Fläche gegenüber der ersten Fläche, die zum hinteren Lager orientiert ist, aufweist,
- wobei die zweite Fläche eine longitudinale Wand eines Strömungsdurchlasses (17) für Kühlungsfluid bildet, wobei eine andere longitudinale Wand dieses Durchlasses (17) durch das den Stator unterstützende hintere Lager (4) gebildet ist,
**dadurch gekennzeichnet, dass** die Abführungsbrücke ein über das hintere Lager (4) erhöhtes Teil (16) bildet und die zweite Fläche der Wärmeabführungsbrücke (16) Kühlungsmittel (18) aufweist, die in dem Fluidströmungsdurchlass (17) angeordnet sind und dazu bestimmt sind, die elektronischen Leistungskomponenten zu kühlen, und dass die Bahnen (25), auf denen die elektronischen Leistungskomponenten angeordnet sind, mit der Wärmeabführungsbrücke fest verbunden sind.

2. Starter-Generator für Kraftfahrzeug nach Anspruch 1, **dadurch gekennzeichnet, dass** die Kühlungsmittel (18) radial in Richtung des Kühlungsfluidflusses angeordnet sind.

3. Starter-Generator für Kraftfahrzeug nach Anspruch 1 oder 2, **dadurch gekennzeichnet, dass** die Kühlungsmittel Kühlungsflügel (18) umfassen.

4. Starter-Generator für Kraftfahrzeug nach Anspruch 3, **dadurch gekennzeichnet, dass** die Kühlungsflügel (18) radial orientierte Kühlungskanäle bilden.

5. Starter-Generator für Kraftfahrzeug nach einem der vorhergehenden Ansprüche, **dadurch gekennzeichnet, dass** die Kühlungsmittel Säulen (281, 282, 481, 381, 481, 581, 681) aufweisen.

6. Starter-Generator für Kraftfahrzeug nach Anspruch 5, **dadurch gekennzeichnet, dass** die Kühlungsmittel Flügel und Säulen umfassen.

7. Starter-Generator für Kraftfahrzeug nach Anspruch 6, **dadurch gekennzeichnet, dass** wenigstens Bestimmte der Flügel eine Sinusform haben, um einen Venturi-Effekt zu erzeugen.

8. Starter-Generator für Kraftfahrzeug nach einem der Ansprüche 5 bis 7, **dadurch gekennzeichnet, dass** Bestimmte der Säulen (681) Befestigungshöcker der Wärmeabführungseinrichtung (16) an dem hinteren Lager (4) bilden.

9. Starter-Generator für Kraftfahrzeug nach einem der Ansprüche 3 bis 8, **dadurch gekennzeichnet, dass** die Säulen und/oder die Flügel wenigstens teilweise aus Wärmerohren bestehen können.

10. Starter-Generator für Kraftfahrzeug nach einem der vorhergehenden Ansprüche, **dadurch gekennzeichnet, dass** die Kühlungsmittel begünstigt durch wenigstens einen gewölbten Abschnitt (280) der zweiten Fläche der Abführungseinrichtung gebildet sind.

11. Starter-Generator für Kraftfahrzeug nach einem der Ansprüche 3 bis 10, **dadurch gekennzeichnet, dass** sich die axialen Enden der Flügel, die mit der Abführungsbrücke verbunden sind, in einem Abstand von dem hinteren Lager befinden.

12. Starter-Generator für Kraftfahrzeug nach einem der vorhergehenden Ansprüche, **dadurch gekennzeichnet, dass** das hintere Lager einen Boden (40) aufweist, der eine der Wände des Fluidströmungsdurchlasses (17) bildet, dass dieser Boden (40) an seinem äußeren Umfang durch einen Rand (41) verlängert ist, der mit seitlichen Öffnungen (4a-4d) versehen ist, und dass das hintere Lager wenigstens eine Ablenkeinrichtung (24) trägt, die am Ausgang der seitlichen Öffnungen (4a-4d) des Randes (41) des hinteren Lagers (4) angeordnet ist.

13. Starter-Generator für Kraftfahrzeug nach Anspruch 12, **dadurch gekennzeichnet, dass** er eine Schutzhaube (11) in Hohlform aufweist, die die elektronische Leistungsschaltung (15) und die Abführungsbrücke (16) abdeckt, und dass die Ablenkeinrichtung (24) am freien Ende der Haube (11) gebildet ist.

14. Starter-Generator für Kraftfahrzeug nach Anspruch 13, **dadurch gekennzeichnet, dass** das freie Ende (24) der Haube (11) erweitert ist, um die Ablenkeinrichtung zu bilden.

15. Starter-Generator für Kraftfahrzeug nach Anspruch 13 oder 14, **dadurch gekennzeichnet, dass** die Schutzhaube (11) wenigstens eine Öffnung (19) aufweist, die mit dem Kühlungsfluid-Strömungsdurchlass (17) kommuniziert.

16. Starter-Generator für Kraftfahrzeug nach einem der vorhergehenden Ansprüche, **dadurch gekennzeichnet, dass** er wenigstens einen Zwischenraum zwischen der Drehwelle des Rotors und der Abführungsbrücke, der einen axialen Fluidströmungsdurchlass bildet, enthält.

17. Starter-Generator für Kraftfahrzeug nach einem der vorhergehenden Ansprüche, **dadurch gekennzeichnet, dass** die Abführungsbrücke an dem hinteren Lager (4) durch Montagebolzen (20) befestigt ist.

18. Starter-Generator für Kraftfahrzeug nach Anspruch 18, **dadurch gekennzeichnet, dass** die Abführungsbrücke über dem hinteren Lager mittels Höcker (21), die mit der Abführungsbrücke fest verbunden sind, befestigt ist.

19. Starter-Generator für Kraftfahrzeug nach einem der vorhergehenden Ansprüche, **dadurch gekennzeichnet, dass** er zwischen der Abführungsbrücke und dem hinteren Lager eine Schicht aus elektrisch isolierendem Material aufweist.

20. Starter-Generator für Kraftfahrzeug nach einem der vorhergehenden Ansprüche, **dadurch gekennzeichnet, dass** die Abführungsbrücke, die die Kühlungsmittel enthält, und die Brücke, die die elektronische Leistungsschaltung trägt, aus einem Block hergestellt sind.

21. Starter-Generator für Kraftfahrzeug nach einem der vorhergehenden Ansprüche, **dadurch gekennzeichnet, dass** die Bahnen (25) von der Wärmeabführungsbrücke elektrisch isoliert sind.
